# FASCICULE DE BREVET EUROPEEN

(11) **EP 1 692 015 B1**
(45) Date de publication et mention de la délivrance du brevet: **30.06.2010**
(21) Numéro de dépôt: 04816498.2
(22) Date de dépôt: 01.12.2004
(51) Int. Cl.: B60R 16/02, F16H 63/42

(54) **SYSTEME D'AFFICHAGE DU RAPPORT DE BOITES DE VITESSES PRECONISE**
SYSTEM ZUR ANZEIGE EINES EMPFOHLENEN GETRIEBEGANGS
SYSTEM FOR DISPLAYING A RECOMMENDED GEARBOX RATIO

(30) Priorité: 02.12.2003 FR 0314095
(43) Date de publication de la demande: 23.08.2006
(73) Titulaire: RENAULT S.A.S., 92100 Boulogne Billancourt (FR)
(72) Inventeur: TAFFIN, Christian, F-78320 LE MESNIL SAINT-DENIS (FR); DUBOIS, Jacques, F-91750 CHAMPCUEIL (FR)
(86) Numéro de dépôt international: PCT/FR2004/050636
(87) Numéro de publication internationale: WO 2005/056343

(56) Documents cités:
- EP-A- 0 007 881
- EP-A- 1 016 810
- GB-A- 2 084 524
- US-A- 4 267 545

## Description

La présente invention relève du domaine des dispositifs d'assistance du conducteur dans un véhicule automobile équipé d'un groupe motopropulseur offrant une pluralité de rapports de transmission de la puissance du moteur vers les roues motrices.

Le document US 4 439 158 décrit un appareil d'aide à la conduite pour véhicule à boîte de vitesses manuelle et embrayage. L'indication des changements de rapports est calculée à partir de la vitesse du moteur, du rapport de réduction de la transmission, de la charge du moteur et d'autres facteurs incluant la température du moteur, la vitesse du véhicule, la charge du véhicule et la température de la transmission.

En plus d'indication visuelle ou audible, relative au changement de transmission qui devrait avoir lieu, il est également prévu un affichage numérique du rapport de transmission souhaitable et un indicateur numérique en temps réel qui montre le rapport de transmission engagé. Ainsi, outre les indicateurs sonores, deux afficheurs sont prévus.

Or, de tels afficheurs sont spécifiques à l'application proposée par ce document et donc onéreux. Par ailleurs, l'affichage de deux informations simultanément relatives au rapport de transmission peut être une source de confusion chez le conducteur. Un autre système d'aide à la conduite par détermination de rapports de transmission est décrit dans le EP-A-1016810.

L'invention propose de remédier aux inconvénients du dispositif ci-dessus, en proposant l'affichage d'une information pertinente et claire.

Le système d'affichage du rapport de transmission préconisé, selon un aspect de l'invention, est destiné à un véhicule à moteur. Le système comprend un afficheur visible par le conducteur du véhicule, un élément de détermination du rapport engagé, un élément de détermination du rapport préconisé, et un élément de détermination de l'information de rapport de transmission devant être affiché par l'afficheur afin de mettre à la disposition du conducteur une information pertinente de rapport de transmission. Le risque de confusion par le conducteur est ainsi diminué par le fait que seule l'information pertinente lui est communiquée sur l'afficheur.

L'afficheur peut afficher, soit le rapport engagé, soit le rapport préconisé.

Dans un mode de réalisation de l'invention, l'afficheur est apte à afficher le rapport engagé de façon non clignotante et est apte à afficher le rapport préconisé de façon clignotante. On facilite ainsi la reconnaissance par le conducteur de la nature de l'information affichée.

Dans un mode de réalisation de l'invention, l'élément de détermination du rapport engagé, l'élément de détermination du rapport préconisé, et l'élément de détermination de l'information de rapport font partie d'une unité de contrôle du moteur. Le système peut comprendre une liaison multiplexée entre l'afficheur et l'élément de détermination de l'information de rapport. On peut ainsi se servir d'une liaison multiplexée préexistante, ce qui réduit très fortement le coût de connexion de ces deux éléments.

Avantageusement, l'élément de détermination de l'information de rapport est prévu pour émettre un ordre d'affichage du rapport engagé lorsque le rapport préconisé est égal au rapport engagé, et un ordre d'affichage du rapport préconisé lorsque le rapport préconisé est différent du rapport engagé. Le conducteur peut ainsi voir de façon continue le rapport engagé lorsque ledit rapport engagé est égal au rapport préconisé, et voir de façon clignotante le rapport préconisé dans le cas où ledit rapport préconisé diffère du rapport engagé. Le conducteur peut ainsi se rendre compte de façon aisée et intuitive qu'une modification du rapport de transmission est souhaitable.

En outre, l'invention prévoit la mise en oeuvre d'un afficheur au tableau de bord ou tout au moins dans le champ visuel du conducteur, ce qui est encore plus économique que l'art antérieur mettant en oeuvre deux afficheurs. Comme les tableaux de bord des véhicules à boîtes de vitesses automatiques comportent en général un afficheur du rapport de transmission engagé, il est particulièrement avantageux et économique d'associer le système d'affichage de rapport de transmission à un tableau de bord du type utilisé pour les véhicules à boîte de vitesses automatique, pour l'ensemble des véhicules d'une gamme. On peut ainsi mettre en oeuvre l'invention avec un tableau de bord préexistant, d'où une réduction du coût de mise en oeuvre du système d'affichage du rapport de transmission. Par ailleurs, une deuxième source d'économie réside dans le fait que l'ensemble des véhicules produits peuvent être équipés du même tableau de bord, ce qui permet de n'approvisionner qu'un seul type de tableau de bord de véhicule indépendamment du type de boîte de vitesses, le système d'affichage de rapport de transmission s'appliquant aussi bien à une boîte de vitesses mécanique qu'à une boîte de vitesses automatique.

La présente invention sera mieux comprise à l'étude de la description détaillée de quelques modes de réalisation illustrés par les dessins annexés, sur lesquels :
- la figure 1 est un chronogramme d'affichage ; et
- la figure 2 est une vue schématique du système d'affichage selon un aspect de l'invention.

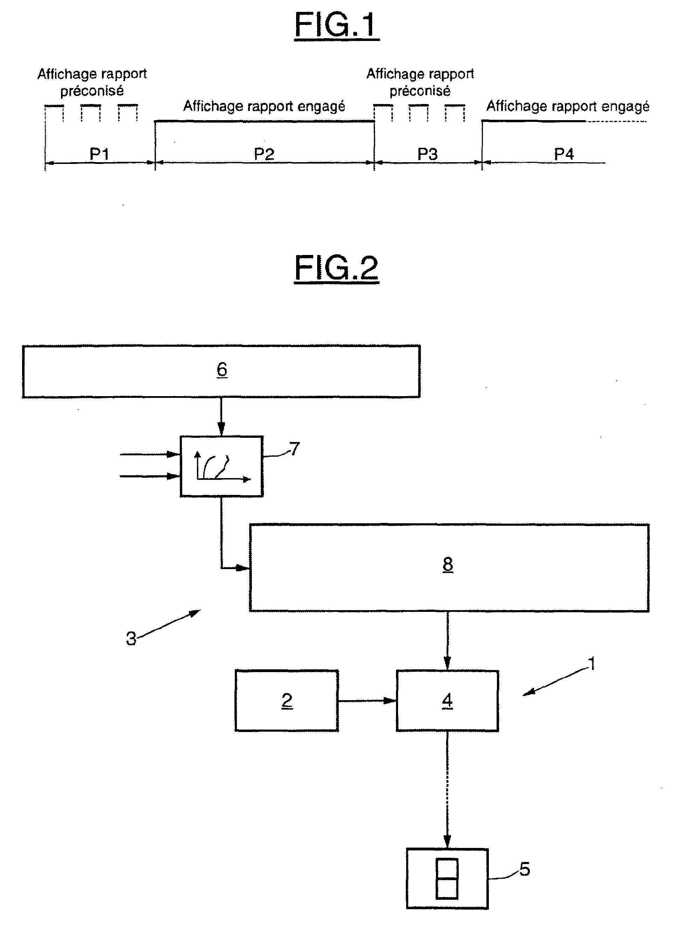

Comme on peut le voir sur la figure 1, pendant une première période P1, le rapport préconisé et le rapport engagé diffèrent, l'afficheur affiche le rapport préconisé de façon clignotante avec trois sous-périodes de clignotement de durée prédéterminée, de l'ordre de quelques secondes séparées par des intervalles pendant lesquels aucune information n'est affichée sur l'afficheur.

Au cours de la période P2, le rapport préconisé et le rapport engagé sont identiques. Le rapport engagé est alors affiché de façon continue pendant la période P2 par l'afficheur. La période P3 est similaire à la période P1.

Au cours de la période P4, le rapport préconisé et le rapport engagé sont identiques. Toutefois, on peut prévoir de façon avantageuse une variante d'affichage qui permet au conducteur de mieux se rendre compte de l'action qui lui est conseillée. On détermine alors un nombre maximum de clignotements dans une période d'affichage du rapport préconisé. A l'issue du nombre maximum de clignotements, l'afficheur affiche à nouveau le rapport engagé, et ce pendant une durée déterminée avant d'afficher à nouveau le rapport préconisé et ce de façon clignotante et ainsi de suite.

Dans le cas illustré sur la figure 2, on prévoit que le nombre maximum de clignotements successifs est fixé à trois et la période P2 correspond à une période de réaffichage du rapport engagé à des instants où le rapport engagé diffère pourtant du rapport préconisé. La période P2 est alors de durée déterminée, par exemple 30 secondes. A l'issue de la période P2, l'afficheur entame une nouvelle période P3 identique à la période P1 avec un nombre de clignotements fixés à trois, à titre d'exemple.

En outre, on peut prévoir que la fréquence de clignotements soit paramétrable, ce qui permet d'avertir le conducteur qu'il devrait changer de rapport lorsque le rapport préconisé est différent du rapport engagé.

La détermination du rapport préconisé peut être effectuée par un algorithme, par exemple par une loi auto-adaptative, tel que décrit dans les documents WO 98 19 082, WO 01 32 460, EP 777 071, EP 965 777, US 4 599 917 ou encore US 6 044 317, qui donnent satisfaction.

A titre d'exemple, on détaille ci-après différentes phases de fonctionnement d'un véhicule équipé du système d'affichage de rapport de transmission.

Lors de la mise en route du moteur, l'afficheur reste éteint. Au point mort, l'afficheur peut rester éteint ou encore afficher zéro. La détection du point mort peut être effectuée par une information représentative de point mort disponible sur le réseau multiplexé du véhicule. Au démarrage, également appelé décollage, il convient de distinguer la mise en marche avant et la mise en marche arrière. Lorsque la position de la marche arrière est détectée, l'afficheur affiche la position de marche arrière.

En phase de démarrage, dès que le véhicule est mis en mouvement et si les positions de marche arrière ou de neutre ne sont pas détectées, l'afficheur affiche le rapport de première préconisé, par exemple de façon clignotante. Dès qu'il est possible de déterminer le rapport engagé, alors l'afficheur peut afficher le rapport engagé ou le rapport préconisé, comme décrit ci-dessus. La détection de rapport engagé peut être effectuée par comparaison entre le régime de rotation du moteur et la vitesse des roues motrices.

En phase de roulage, on distingue différentes phases. En phase de roulage de type urbain, il est préférable d'inciter le conducteur à adopter une conduite calme. La préconisation de rapport est déterminée afin que le conducteur passe rapidement le rapport supérieur dans le but de réduire la consommation de carburant. Les contraintes d'acoustique et de vibration sont prises en compte pour éviter les sous-régimes du moteur, qui sont générateurs de vibrations et d'à-coups. De plus, le rapport préconisé tient compte du potentiel d'accélération du véhicule en tenant compte de la charge du véhicule et d'une éventuelle montée. Le calcul du rapport préconisé peut s'appuyer sur une cartographie de loi de passage dédiée à la conduite en ville paramétrée en fonction de la vitesse du véhicule et d'une variable représentative de la charge appliquée au moteur sur la base d'une position de la pédale d'accélérateur, d'un angle de papillon, du couple moteur, de la puissance, etc.

La détection de roulage en ville peut se baser sur une analyse de la vitesse moyenne, une vitesse inférieure à 50 km/h étant considérée comme un roulage de type urbain, ou encore par des informations issues d'un système de navigation.

En roulage sur autoroute, donc à grande vitesse, il faut inciter le conducteur à passer les rapports supérieurs pour éviter, par exemple, de rester sur le cinquième rapport pendant plusieurs kilomètres, alors que le sixième rapport serait adapté. De plus, le rapport préconisé tient compte du potentiel d'accélération du véhicule en cas de montée et/ou de charge. Toutefois, dans le cas du roulage sur autoroute, il n'est nullement impératif que le conducteur engage le rapport préconisé. Un réglage spécifique des paramètres de temporisation et de nombre de clignotements, ainsi qu'une période d'arrêt de clignotements permet de tenir compte de cette particularité en adoptant un clignotement lent avec une période d'arrêt de clignotements longue, par exemple de l'ordre d'une minute.

Le calcul du rapport préconisé s'appuiera sur une cartographie de loi de passage dédiée à la conduite sur autoroute, paramétrée en fonction de la vitesse du véhicule et d'une variable représentative de la charge appliquée au moteur. La détection de roulage sur autoroute peut être basée sur différents indicateurs, tels que l'analyse de la vitesse de roulage moyenne, par exemple supérieure à 100 km/h, ou encore d'informations issues d'un système de navigation.

En phase de roulage en montée ou sous forte charge du véhicule, il est important de ne pas préconiser un rapport qui ne permettrait pas au véhicule de maintenir sa vitesse, voire de conserver une capacité d'accélération minimale. Si le véhicule ralentit en montée, il convient d'indiquer au conducteur un rétrogradage pour maintenir la vitesse. Les paramètres de temporisation, de nombre de clignotements et de périodes d'arrêt de clignotements peuvent être adaptés avec une période d'arrêt de clignotements de l'ordre d'une dizaine de secondes.

En phase de descente, il faut éviter de préconiser un rapport qui ne fournira pas au véhicule suffisamment de frein-moteur. Si le véhicule accélère trop en descente, en particulier en cas de levée de pied de l'accélérateur, il convient d'indiquer au conducteur de rétrograder pour maintenir sa vitesse. Le mode d'affichage peut être similaire à celui de la phase de montée ou au cas de charge.

En cas de freinage, l'afficheur indique au conducteur les changements de rapport qui permettront de gérer correctement le frein-moteur en fonction de l'intensité du freinage et d'éviter des sous-régimes présentant des risques potentiels de calage du moteur. On peut, à cet effet, calculer une vitesse prédite, somme de la vitesse mesurée et du produit de l'accélération par une durée d'anticipation, ce qui permet d'anticiper légèrement les rétrogradages.

En cas de décélération moyenne ou forte, l'afficheur n'a pas le temps d'afficher le rapport préconisé et maintiendra l'affichage du rapport engagé. En cas de très forte décélération ou de freinage d'urgence, par exemple en cas d'activation d'un système antiblocage de freins, il est préférable de ne rien afficher. En cas de freinage avec affichage du rapport préconisé, compte tenu du fait que les phases de freinage sont relativement brèves, le clignotement pourra être relativement rapide avec une durée d'affichage du rapport préconisé de l'ordre d'une demi-seconde, un nombre de clignotements de deux et une période d'arrêt de clignotement de l'ordre d'une dizaine de secondes.

En phase de conduite calme, on privilégiera le confort de conduite, une capacité de reprise modérée, un bruit réduit et une consommation de carburant également réduite. Le rapport préconisé sera déterminé de façon que le conducteur passe assez tôt le rapport supérieur pour minimiser la consommation d'énergie du véhicule. Les contraintes d'acoustique et de vibrations sont prises en compte pour éviter les sous-régimes générateurs de vibrations et d'à-coups. Le rapport préconisé tient également compte du potentiel d'accélération du véhicule. On peut alors prévoir une durée d'affichage du rapport préconisé de l'ordre d'une seconde, un nombre de clignotements de l'ordre de trois à cinq, une période d'arrêt de clignotements de l'ordre d'une dizaine de secondes.

En phase de conduite sportive, le conducteur souhaite alors privilégier la performance du véhicule. L'afficheur affiche alors le rapport engagé sans qu'il soit nécessaire d'indiquer le rapport préconisé sauf, en cas de très forte charge, pour indiquer au conducteur le rapport qui procure la puissance maximale du groupe motopropulseur, notamment à l'approche de la coupure parce que la puissance motrice devient plus grande si on passe le rapport supérieur. On peut alors prévoir un affichage discret du rapport préconisé avec une durée d'affichage de l'ordre d'une demi-seconde, un nombre de clignotements de l'ordre de deux ou trois, et une période d'arrêt de clignotements de l'ordre d'une demi-minute.

En phase d'activation d'un régulateur ou d'un limiteur de vitesse, on se ramènera au mode d'affichage utilisé sur autoroute dans la mesure où la régulation de vitesse est normalement utilisée sur autoroute ou sur des voies relativement rapides.

En phase d'activation d'un système d'anti-patinage, il convient d'éviter tout changement de rapport qui pertuberait la régulation de l' anti-patinage. L'afficheur affiche alors le rapport engagé. Toutefois, on peut prévoir que le système d'anti-patinage envoie des informations à l'élément de détermination de l'information de rapport de transmission pour fournir un rapport de transmission préconisé. En cas de virage prononcé, il convient d'éviter tout changement de rapport qui pourrait perturber la stabilité du véhicule. L'afficheur affiche alors le rapport engagé seulement.

En phase de levée rapide de la pédale d'accélérateur, ou de relèvement complet de la pédale d'accélérateur, le conducteur souhaite bénéficier du frein-moteur. L'afficheur affiche alors le rapport engagé seulement.

Dans le cas d'un véhicule à boîte de vitesses manuelle, lors d'un passage de vitesses en roulant avec action sur l'embrayage, il n'est plus possible de déterminer le rapport engagé. Si, au moment où le changement de rapport de transmission a lieu, le rapport engagé antérieurement et le rapport préconisé diffèrent, alors il est probable que le conducteur souhaite respecter la consigne de rapport préconisé. L'afficheur continue alors à afficher le rapport préconisé de façon clignotante pendant toute la durée du changement de rapport, et ce jusqu'au moment où le nouveau rapport est établi. Si la détection du nouveau rapport établi devient trop longue, alors l'afficheur s'éteint. Si, au moment où le changement de rapport a lieu, le rapport engagé antérieurement et le rapport préconisé sont identiques, alors il est préférable de ne plus rien afficher et l'afficheur s'éteint pendant toute la durée du changement de rapport.

En cas de passage d'un rapport de vitesses à l'arrêt, en phase de démarrage, la détection du rapport engagé est difficile ou peu fiable. L'afficheur reste alors éteint tant que la détermination du rapport engagé n'est pas opérationnelle, ou alors on peut afficher le rapport 1 en phase clignotante jusqu'à la confirmation de la reconnaissance du rapport engagé.

Tel qu'illustré sur la figure 2, le système d'affichage du rapport de transmission préconisé, référencé 1 dans son ensemble, comprend un élément de détermination du rapport engagé 2, un élément de détermination du rapport préconisé 3, un élément de détermination de l'information de rapport devant être affichée 4 et un afficheur 5. L'afficheur 5 peut être de type standard utilisé pour les tableaux de bord de véhicules à boîtes de vitesses automatiques. Les sorties des éléments 2 et 3 sont reliées à l'élément 4 de détermination d'information de rapport devant être affiché. L'élément 2 de détermination du rapport engagé peut être relié à une liaison multiplexée, non représentée, pour y récupérer une information relative au rapport engagé en provenance de la boîte de vitesses.

L'élément 3 de détermination du rapport préconisé comprend un bloc 6 de détermination du type de jeu de lois de passages d'un certain nombre d'informations représentatives de l'environnement et du groupe motopropulseur, du conducteur et de ses actions de conduite. En fonction du style de conduite, de la pente de la route, de l'adhérence de la chaussée, etc., un jeu de lois de passage est sélectionné. L'élément 3 comprend également un bloc 7 de détermination du rapport de la transmission en fonction de la vitesse du véhicule et de la charge du moteur.

La charge du moteur peut être représentée par la position de la pédale d'accélérateur, une grandeur représentative de la demande du conducteur exprimée en puissance ou en couple, ou encore le degré d'ouverture de l'organe de régulation de l'admission du combustible au moteur. Ainsi, des courbes permettent de déterminer la consigne de rapport demandée. Néanmoins, cette consigne de rapport doit être corrigée pour tenir compte des intentions de conduite du conducteur, telles que le souhait de bloquer un rapport lorsque le conducteur relève le pied rapidement de l'accélérateur.

L'élément 3 de détermination du rapport préconisé comprend donc également un bloc 8 de correction du rapport préconisé recevant le signal de sortie du bloc 7 de détermination du rapport préconisé et recevant également en entrée des informations relatives à la pente de la route, à la vitesse du véhicule, à l'accélération instantanée du véhicule, à l'accélération que le véhicule aurait sur le rapport de transmission supérieur, au régime de rotation du moteur, à un indicateur représentatif du style de conduite, à la masse du véhicule, à une information représentative de l'enfoncement de la pédale d'accélérateur, à une information représentative de la dérivée de l'enfoncement de la pédale d'accélérateur, à une information représentative de l'état d'activation du freinage, à une information représentative de l'état du trafic routier au moyen d'une unité de contrôle de navigation, à une information représentative de la distance entre le véhicule et le prochain virage au moyen d'une unité de contrôle de navigation, ou encore à une information représentative de la distance entre le véhicule et le véhicule ou l'obstacle qui précède par une unité de contrôle de régulation de distance entre véhicules ou une autre unité de contrôle, non représentée, susceptible de communiquer une telle information.

Le bloc 8 permet donc de corriger le signal de sortie du bloc 7 de détermination du rapport préconisé en fonction des informations reçues et d'émettre en sortie un signal de rapport préconisé corrigé qui sera reçu par l'élément 4 de détermination de l'information de rapport devant être affiché par l'afficheur 5.

Le système d'affichage de rapport de transmission permet donc un affichage judicieux adapté aux circonstances de conduite pour fournir une information judicieuse et claire, peu susceptible de confusion de la part du conducteur.

## Revendications

1. Systéme (1) d'affichage du rapport de transmission préconisé pour un véhicule à moteur, comprenant un afficheur (5) prévu pour être visible par le conducteur du véhicule, un élément (2) de détermination du rapport engagé, et un élément (3) de détermination du rapport préconisé, **caractérisé par le fait que** l'élément (3) de détermination du rapport préconisé comprend
un bloc (6) de détermination des lois de passage étant apte à déterminer les lois de passage de rapports de transmission représentatives de l'environnement, du groupe motopropulseur, et des actions de conduite du conducteur et
un bloc (7) de détermination du rapport de transmission en fonction de la loi de passage de rapports de transmission reçue du bloc (6) de détermination, de la vitesse du véhicule et de la charge du moteur,
le système d'affichage comprenant un élément (4) de détermination de l'information de rapport devant être affichée par l'afficheur (5) en fonction des signaux de sortie provenant de l'élément (3) de détermination du rapport préconisé et de l'élément (2) de détermination du rapport engagé afin de mettre à disposition du conducteur une information pertinente de rapport de transmission.

2. Système selon la revendication 1 comprenant un bloc (8) de correction du rapport préconisé par le bloc (7) de détermination du rapport de transmission, et recevant des informations sur, notamment, les intentions de conduite du conducteur.

3. Système selon l'une des revendications précédentes, **caractérisé par le fait que** l'afficheur (5) est apte à afficher le rapport engagé, de façon non clignotante.

4. Système selon l'une des revendications précédentes, **caractérisé par le fait que** l'afficheur (5) est apte à afficher le rapport préconisé, de façon clignotante.

5. Système selon l'une quelconque des revendications précédentes, **caractérisé par le fait que** l'élément (2) de détermination du rapport engagé, l'élément (3) de détermination du rapport préconisé, et l'élément (4) de détermination de l'information de rapport font partie d'une unité de contrôle du moteur.

6. Systéme selon l'une quelconque des revendications précédentes, **caractérisé par le fait qu'**il comprend une liaison multiplexée entre l'afficheur (5) et l'élément (4) de détermination de l'information de rapport.

7. Système selon l'une quelconque des revendications précédentes, **caractérisé par le fait que** l'élément (4) de détermination de l'information de rapport est prévu pour émettre un ordre d'affichage du rapport engagé lorsque le rapport préconisé est égal au rapport engagé, et un ordre d'affichage du rapport préconisé lorsque le rapport préconisé est différent du rapport engagé.

8. Procédé de fonctionnement du système d'affichage selon l'une quelconque des revendications précédentes, **caractérisé en ce qu'**il comprend une étape au cours de laquelle :
- on détermine que le rapport enlacé est différent du rapport préconisé, ledit rapport préconisé étant déterminé en fonction de la vitesse du véhicule et de la charge du moteur et
- on affiche le rapport préconisé de façon clignotante,

9. Procédé de fonctionnement selon la revendication 8, au cours duquel :
- on détermine que le rapport engagé est identique du rapport préconisé, et
- on affiche le rapport engagé de façon continue,

10. Procédé de fonctionnement selon la revendication 8, au cours duquel :
- on détermine que le rapport engagé est identique du rapport préconisé, et
- on affiche de façon continue le rapport engagé au cours d'une première période
- on affiche de façon clignotante le rapport engagé au cours d'une deuxième période, et
- on alterne la première période d'affichage et la deuxième période d'affichage tant que le rapport engagé est identique au rapport préconisé.

## Claims

1. System (1) for displaying the recommended transmission ratio for a motor vehicle, comprising a display (5) designed to be visible to the driver of the vehicle, an element (2) for determining the engaged ratio, and an element (3) for determining the recommended ratio, **characterized in that** the element (3) for determining the recommended ratio comprises:
a unit (6) for determining change laws being capable of determining the transmission-ratio-change laws representative of the environment, of the drive train, and of the driving actions of the driver, and
a unit (7) for determining the transmission ratio as a function of the transmission-ratio-change law received from the determination unit (6), of the vehicle speed and of the engine load,
the display system comprising an element (4) for determining the ratio information before being displayed by the display (5) as a function of the output signals originating from the element (3) for determining the recommended ratio and from the element (2) for determining the engaged ratio in order to provide the driver with pertinent transmission-ratio information.

2. System according to Claim 1, comprising a unit (8) for correcting the recommended ratio determined by the unit (7) for determining the transmission ratio, and receiving information in particular on the driving intentions of the driver.

3. System according to one of the preceding claims, **characterized in that** the display (5) is capable of displaying the engaged ratio in a non-blinking manner.

4. System according to one of the preceding claims, **characterized in that** the display (5) is capable of displaying the recommended ratio in a blinking manner.

5. System according to any one of the preceding claims, **characterized in that** the element (2) for determining the engaged ratio, the element (3) for determining the recommended ratio, and the element (4) for determining the ratio information form part of an engine control unit.

6. System according to any one of the preceding claims, **characterized in that** it comprises a multiplexed connection between the display (5) and the element (4) for determining the ratio information.

7. System according to any one of the preceding claims, **characterized in that** the element (4) for determining the ratio information is designed to transmit an instruction to display the engaged ratio when the recommended ratio is equal to the engaged ratio, and an instruction to display the recommended ratio when the recommended ratio is different from the engaged ratio.

8. Method for operating the display system according to any one of the preceding claims, **characterized in that** it comprises a step during which:
- it is determined that the engaged ratio is different from the recommended ratio, the said recommended ratio being determined as a function of the vehicle speed and of the engine load, and
- the recommended ratio is displayed in a blinking manner.

9. Operation method according to Claim 8, during which:
- it is determined that the engaged ratio is identical to the recommended ratio, and
- the engaged ratio is displayed in a continuous manner.

10. Operating method according to Claim 8, during which:
- it is determined that the engaged ratio is identical to the recommended ratio, and
- the engaged ratio is displayed in a continuous manner for a first period,
- the engaged ratio is displayed in a blinking manner for a second period, and
- the first display period and the second display period are alternated so long as the engaged ratio is identical to the recommended ratio.

## Patentansprüche

1. System (1) zur Anzeige des empfohlenen Übersetzungsverhältnisses für ein Motorfahrzeug, das ein Display (5), das vorgesehen ist, um für den Fahrer des Fahrzeugs sichtbar zu sein, ein Element (2) zur Bestimmung des eingelegten Gangs, und ein Element (3) zur Bestimmung des empfohlenen Gangs enthält, **dadurch gekennzeichnet, dass** das Element (3) zur Bestimmung des empfohlenen Gangs enthält
einen Block (6) zur Bestimmung der Schaltgesetze, der fähig ist, die Schaltgesetze von Übersetzungsverhältnissen zu bestimmen, die für die Umgebung der Antriebseinheit und für die Fahraktionen des Fahrers repräsentativ sind, und einen Block (7) zur Bestimmung des Übersetzungsverhältnisses in Abhängigkeit vom Übersetzungsverhältnis-Schaltgesetz, das vom Bestimmungsblock (6) empfangen wird, von der Geschwindigkeit des Fahrzeugs und von der Last des Motors,
wobei das Anzeigesystem ein Element (4) zur Bestimmung der vom Display (5) anzuzeigenden Ganginformation in Abhängigkeit von den Ausgangssignalen, die vom Element (3) zur Bestimmung des empfohlenen Gangs und vom Element (2) zur Bestimmung des eingelegten Gangs kommen, enthält, um dem Fahrer eine relevante Information über das Übersetzungsverhältnis zur Verfügung zu stellen.

2. System nach Anspruch 1, das einen Block (8) zur Korrektur des vom Block (7) zur Bestimmung des Übersetzungsverhältnisses bestimmten empfohlenen Gangs enthält und Informationen insbesondere über die Fahrabsichten des Fahrers empfängt.

3. System nach einem der vorhergehenden Ansprüche, **dadurch gekennzeichnet, dass** das Display (5) den eingelegten Gang nicht blinkend anzeigen kann.

4. System nach einem der vorhergehenden Ansprüche, **dadurch gekennzeichnet, dass** das Display (5) den empfohlenen Gang blinkend anzeigen kann.

5. System nach einem der vorhergehenden Ansprüche, **dadurch gekennzeichnet, dass** das Element (2) zur Bestimmung des eingelegten Gangs, das Element (3) zur Bestimmung des empfohlenen Gangs, und das Element (4) zur Bestimmung der Ganginformation Teil einer Kontrolleinheit des Motors sind.

6. System nach einem der vorhergehenden Ansprüche, **dadurch gekennzeichnet, dass** es eine Multiplexverbindung zwischen dem Display (5) und dem Element (4) zur Bestimmung der Ganginformation enthält.

7. System nach einem der vorhergehenden Ansprüche, **dadurch gekennzeichnet, dass** das Element (4) zur Bestimmung der Ganginformation vorgesehen ist, um einen Anzeigebefehl des eingelegten Gangs auszugeben, wenn der empfohlene Gang gleich dem eingelegten Gang ist, und einen Anzeigebefehl des empfohlenen Gangs auszugeben, wenn der empfohlene Gang sich vom eingelegten Gang unterscheidet.

8. Arbeitsverfahren des Anzeigesystems nach einem der vorhergehenden Ansprüche, **dadurch gekennzeichnet, dass** es einen Schritt enthält, während dem:
- bestimmt wird, dass der einlegte Gang sich vom empfohlenen Gang unterscheidet, wobei der empfohlene Gang in Abhängigkeit von der Geschwindigkeit des Fahrzeugs und der Last des Motors bestimmt wird, und
- der empfohlene Gang blinkend angezeigt wird.

9. Arbeitsverfahren nach Anspruch 8, während dem:
- bestimmt wird, dass der eingelegte Gang gleich dem empfohlenen Gang ist, und
- der eingelegte Gang durchgehend angezeigt wird.

10. Arbeitsverfahren nach Anspruch 8, während dem:
- bestimmt wird, dass der eingelegte Gang gleich dem empfohlenen Gang ist, und
- der eingelegte Gang während einer ersten Periode durchgehend angezeigt wird,
- der eingelegte Gang während einer zweiten Periode blinkend angezeigt wird, und
- die erste Anzeigeperiode und die zweite Anzeigeperiode abgewechselt werden, so lange der eingelegte Gang gleich dem empfohlenen Gang ist.
